# EUROPEAN PATENT APPLICATION

(11) **EP 2 131 375 A1**
(43) Date of publication of application: **09.12.2009**
(21) Application number: 08722631.2
(22) Date of filing: 21.03.2008
(51) Int. Cl.: H01G 9/038, H01G 9/058

(54) **ELECTRIC STORAGE ELEMENT**

(30) Priority: 22.03.2007 JP 2007075086
(71) Applicant: Eamex Corporation, Suita-shi Osaka 564-0062 (JP)
(72) Inventor: ITO, Kengo, Suita-shi, Osaka 564-0062 (JP)
(74) Representative: Luderschmidt, Schüler & Partner
(86) International application number: PCT/JP2008/055267
(87) International publication number: WO 2008/123137

(57) **Abstract**

This invention provides a high-capacitance electric storage element which, by virtue of the adoption of a metal electrode, can realize a large specific capacitance, a high energy density, and a higher withstanding voltage (not less than 6.0 V) than the prior art. The electric storage element comprises a metal electrode and a polymeric electrolyte-containing electrolyte. The electric storage element is **characterized in that** the metal electrode is formed so as to constitute a pair electrode, the metal electrode is in contact with the electrolyte, the metal electrode is provided on the surface and within the polymeric electrolyte, the electrolyte contains an amphiphatic polyether compound and/or a lipophilic compound, or a hydrophilic polyether compound and/or glycerin carbonate which are liquid under room temperature and atmospheric pressure conditions, and the electrolyte is in the state of being swollen with the amphiphatic polyether compound and/or the lipophilic compound, or the hydrophilic polyether compound and/or glycerin carbonate.

## Description

### TECHNICAL FIELD

The present invention relates to an electric storage element in which metal electrodes are formed on and within a polymeric electrolyte.

### BACKGROUND ART

An electric storage element is a device or a circuit element for storing a charge between electrodes and is called a condenser or a capacitor. Further, in recent years, the capacitor is particularly attracting attention since it can be used for such applications as a power source for backing up memories of personal computers, portable terminals and the like, as a power source for countermeasure against instantaneous power failure, and as a solar power generation energy storage system in combination with a solar cell.

A metal electrode and a carbon electrode are electrodes primarily used in the capacitor (condenser). The carbon electrode is an electrode made of a carbon material such as activated carbon, and is suitably used for increasing a capacitance since it has a large specific surface area. However, since a powdered carbon material is to be handled in the kneading process, material handling is difficult and workability is poor. Further, when the electrode is made of the carbon material, a collector such as a metal meshed body or a metal plate needs to be provided as the electrode. Moreover, in order to produce a capacitor without the collector, the shape of the capacitor is restricted to a button shape or the like and a degree of freedom in designing the shape of the capacitor is reduced, and therefore it becomes difficult to form the capacitor in a desired shape according to applications. Furthermore, when the collector is used for every electrode made of the carbon material, the capacitor has a thickness increased by the thickness of the collector, thereby making it more difficult to reduce the thickness of the capacitor. Accordingly, the electrode of the capacitor is preferably the metal electrode not requiring the collector.

As the capacitor using a metal electrode, a thin polymer film condenser in which electrodes are formed on a polymer layer is proposed (e.g., refer to Patent Document 1). However, the polymer film condenser does not have a sufficient electrostatic capacitance and needs further improvement in the electrostatic capacitance. Moreover, in conventional electric storage elements, there is a limitation of application voltage (withstand voltage) whose upper limit is a voltage at which the electrolysis of an electrolyte solution component is initiated and therefore it was difficult to further improve the application voltage.

Patent Document 1: Japanese Patent Application Laid-Open (JP-A) No. 11-8153

### DISCLOSURE OF THE INVENTION

### PROBLEMS TO BE SOLVED BY THE INVENTION

Accordingly, it is an object of the present invention to provide a high-capacitance electric storage element whose electrodes are metal electrodes, and which has a large specific capacitance and a high energy density and enables a higher withstand voltage (6.0 V or more) than in the prior art.

### MEANS FOR SOLVING THE PROBLEMS

The present inventors made earnest investigations concerning the constitution of an electric storage element in order to achieve the above object, and consequently found that the above object can be solved by using the following electric storage element, and these findings have now led to completion of the present invention.

That is, the electric storage element of the present invention is an electric storage element including metal electrodes and an electrolyte containing a polymeric electrolyte,
wherein the metal electrodes are formed so as to constitute an electrode pair and
the metal electrodes are in contact with the electrolyte and are formed on a surface of the polymeric electrolyte and within the polymeric electrolyte, and
wherein an amphiphilic polyether compound and/or a lipophilic compound, which is liquid under the conditions of normal temperature and normal pressure, is contained in the electrolyte and
the electrolyte is in a swollen state due to the amphiphilic polyether compound and/or the lipophilic compound.

Further, the electric storage element of the present invention is an electric storage element including metal electrodes and an electrolyte containing a polymeric electrolyte,
wherein the metal electrodes are formed so as to constitute an electrode pair and
the metal electrodes are in contact with the electrolyte and are formed on a surface of the polymeric electrolyte and within the polymeric electrolyte, and
wherein a hydrophilic polyether compound and/or glycerin carbonate, which is liquid under the conditions of normal temperature and normal pressure, is contained in the electrolyte and
the electrolyte is in a swollen state due to the hydrophilic polyether compound and/or glycerin carbonate.

According to the present invention, as shown in the results of examples, by containing the amphiphilic polyether compound, the lipophilic compound, or a mixture solution thereof, which is liquid under the conditions of normal temperature and normal pressure, in the electrolyte, it is possible to obtain an electric storage element whose electrodes are metal electrodes, and which has a large specific capacitance and a high energy density and enables a higher withstand voltage (6.0 V or more) than in the prior art. The intimate reason why the electric storage element exhibits such characteristics is not clear, but the present inventors infer that by using the amphiphilic polyether compound and/or the lipophilic compound which has been difficult to apply to conventional electric storage elements since the compound generally has a low dielectric constant or a high viscosity and therefore the solubility of the electrolyte in the compound is low or the swelling of the electrolyte by the compound is small and this causes an increase in an internal resistance component and furthermore a reduction in electric conductivity, and by combining the amphiphilic polyether compound, the lipophilic compound or a mixture solution thereof, or the hydrophilic polyether compound and/or glycerin carbonate with the electrolyte and the metal electrodes, the special configurations of these liquids (media) and the metal electrodes, and a specific cooperative action of a matrix polymer with a functional group or an electrolyte component first exert an excellent effect of the present invention. Particularly, the electric storage element of the present invention does not cause an increase in the internal resistance component and furthermore a reduction in electric conductivity, and does not generate air bubbles since it does not cause the electrolysis of a solvent even when a withstand voltage larger than 6.0 V is applied to the metal electrodes. Therefore, the electric storage element of the present invention has a large specific capacitance and a high energy density and enables a higher withstand voltage (6.0 V or more) than in the prior art. In addition, to enable a higher withstand voltage (6.0 V or more) means that positive and negative application voltages are respectively 3.0 V or more, that is, to enable to withstand 6.0 V or more in terms of the sum of applications of positive and negative voltages.

In the electric storage element, the polymeric electrolyte is preferably an ion-exchange resin. Further, the metal electrodes are preferably formed on a surface of the polymeric electrolyte and within the polymeric electrolyte by an electroless plating method.

Further, in the electric storage element, the shape of the metal electrode formed within the polymeric electrolyte is preferably at least one of shapes of fractal, peninsula, island, icicle, polyp and coral each with a neck-shaped constriction, tree, mushroom, and indefinite shape.

Further, in the present invention, in each of the amphiphilic polyether compound and the lipophilic compound, the solidifying point or the softening point is preferably 0°C or lower.

Furthermore, in the present invention, the amphiphilic polyether compound is preferably polyethylene glycol monoalkylate, polypropylene glycol monoalkylate, polyethylene glycol monoalkyl ether, polypropylene glycol monoalkyl ether, and/or analogous compounds thereof.

In the present invention, preferably, the lipophilic compound has a molecular weight of 60 or more, and is an alkyl ester or an alkyl ether of carboxylic acid, in which the electrolyte can be dissolved or by which the electrolyte can be swollen.

In addition, the alkyl ester or the alkyl ether of carboxylic acid, in which the electrolyte can be dissolved or by which the electrolyte can be swollen, in the present invention refers to one in which an electrolyte such as LiTFSI can be dissolved in an amount 1% by weight or more or by which the polymeric electrolyte can be swollen.

Further, in the present invention, in the hydrophilic polyether compound, the solidifying point or the softening point is preferably 0°C or lower.

On the other hand, in the present invention, it is preferable that the negative electrode of the metal electrodes has, at its interface with the polymeric electrolyte, a lithium alloy with a metal component contained in the negative electrode and the lithium alloy is capable of releasing lithium ions through a reversible electrochemical oxidation-reduction reaction. Since the electric storage element further includes the lithium alloy at the interface between the negative electrode and the polymeric electrolyte, an electric double layer is formed at the interface between the metal electrode and the polymeric electrolyte and furthermore an oxidation-reduction reaction of the lithium alloy occurs. Since the specific capacitance value of the electric storage element is a capacitance value as the sum of the capacitance of the electric double layer and a pseudo-capacitance through a redox reaction, the capacitance value of the electric storage element can be further increased by using the electric storage element.

Further, the lithium alloy is preferably a lithium alloy produced by applying a negative voltage to the metal electrodes in a non-aqueous solution containing lithium ions.

Furthermore, the negative electrode is preferably a metal electrode in which a metal component contains one or more metals selected from the group consisting of gold, lead, tin and zinc. Among these metals, the metal electrode as the negative electrode is particularly preferably a gold electrode.

The positive electrode can be made of the same metal element as that of the metal component of the metal electrode as the negative electrode. Further, the electric storage element can be an electrode assembly.

On the other hand, in the present invention, the electric storage element is in a swollen state due to the amphiphilic polyether compound, the lipophilic compound or a mixture solution thereof, or the hydrophilic polyether compound and/or glycerin carbonate, and a degree of swelling of the electric storage element is preferably 3 to 300%. Further, the electrolyte is preferably a polymeric gel electrolyte containing an ion-exchange resin as well as the amphiphilic polyether compound, the lipophilic compound or a mixture solution thereof, or the hydrophilic polyether compound and/or glycerin carbonate. In addition, the degree of swelling of the electric storage element in the present invention refers to a percentage (%) of increase in the thickness of the electric storage element in a state in which the polymeric electrolyte is swollen relative to the thickness of the electric storage element in a state in which the polymeric electrolyte is dry.

Further, since the electric storage element of the present invention has the above-mentioned constitution, it is easy to achieve an electric storage element having a specific capacitance of 20 F/cm³ or more.

### BRIEF DESCRIPTION OF THE DRAWINGS

Fig. 1 is an SEM photograph (magnifications of 7000 times and 350 times) taken for observation of a cross section of an electrode-electrolyte structure in a thickness direction in the electrode-electrolyte structure for use in an electric storage element of the present invention.
Fig. 2 is an SEM photograph (magnifications of 7000 times and 350 times) taken for observation of a cross section of an electrode-electrolyte structure in a thickness direction in the electrode-electrolyte structure for use in an electric storage element of the present invention.
Fig. 3 is an SEM photograph (magnifications of 7000 times and 350 times) taken for observation of a cross section of an electrode-electrolyte structure in a thickness direction in the electrode-electrolyte structure for use in an electric storage element of the present invention.
Fig. 4 is a cyclic voltammogram of the electric storage element of the present invention.

### BEST MODES FOR CARRYING OUT THE INVENTION

Hereinafter, embodiments of the present invention will be described in detail.

An electric storage element of the present invention includes metal electrodes and an electrolyte containing a polymeric electrolyte,
wherein the metal electrodes are formed so as to constitute an electrode pair and
the metal electrodes are in contact with the electrolyte and are formed on a surface of the polymeric electrolyte and within the polymeric electrolyte, and
wherein an amphiphilic polyether compound and/or a lipophilic compound, which is liquid under the conditions of normal temperature and normal pressure, is contained in the electrolyte and
the electrolyte is in a swollen state due to the amphiphilic polyether compound and/or the lipophilic compound.

Further, the electric storage element of the present invention is an electric storage element including metal electrodes and an electrolyte containing a polymeric electrolyte,
wherein the metal electrodes are formed so as to constitute an electrode pair and
the metal electrodes are in contact with the electrolyte and are formed on a surface of the polymeric electrolyte and within the polymeric electrolyte, and
wherein a hydrophilic polyether compound and/or glycerin carbonate, which is liquid under the conditions of normal temperature and normal pressure, is contained in the electrolyte and
the electrolyte is in a swollen state due to the hydrophilic polyether compound and/or glycerin carbonate.

### (Electric storage element)

The electric storage element suppresses an increase in the internal resistance component and furthermore a reduction in electric conductivity, and does not generate air bubbles since it does not cause the electrolysis of a solvent even when a voltage larger than 6.0 V is applied to the metal electrodes by containing the amphiphilic polyether compound, the lipophilic compound, or a mixture solution thereof, which is liquid under the conditions of normal temperature and normal pressure, in the electrolyte. Therefore, it is possible to obtain a high-capacitance electric storage element which has a large specific capacitance and a high energy density and enables a higher withstand voltage (6.0 V or more) than in the prior art.

The amphiphilic polyether compound and/or the lipophilic compound, contained in the electric storage element of the present invention, which is liquid under the conditions of normal temperature and normal pressure, is contained in the electrolyte. It is possible to obtain an electric storage element which enables a higher withstand voltage (6.0 V or more) than in the prior art by containing organic compounds such as the amphiphilic polyether compound and/or the lipophilic compound in the electrolyte.

The amphiphilic polyether compound is not particularly limited as long as it is liquid and amphiphilic under the conditions of normal temperature and normal pressure. Preferably, the amphiphilic polyether compound also has a function as a solvent. The amphiphilic polyether compound has been difficult to use for an electric storage element application since it has a low dielectric constant resulting from its molecular structure and therefore the solubility of the electrolyte in the compound is low or its viscosity is high and this characteristic results in an increase in the internal resistance component and furthermore a reduction in electric conductivity. However, it is estimated that by combining the amphiphilic polyether compound (or a mixture solution of the amphiphilic polyether compound and a lipophilic compound) with the electrolyte and the metal electrodes, the special configurations of these liquids (media) and the metal electrodes and a specific cooperative action of a matrix polymer electrolyte with a functional group or an electrolyte component first exert an excellent effect of the present invention.

The amphiphilic polyether compound may be a polyether compound which can serve as a solvent of a salt containing ions as a carrier of charge or a polyether compound which can serve as a carrier of charge. These polyether compounds may be used alone or in a mixture of two or more species.

The amphiphilic polyether compound is not particularly limited as long as it is an amphiphilic compound having an ether structure, such as an alkyleneoxide (oxyalkylene) unit, as a repeating unit, and examples of the amphiphilic polyether compound include polyether compounds having both a polar part and a nonpolar part in a molecular structure. More specific examples of the amphiphilic polyether compound include polyether compounds, of which only a hydroxyl group at one end is modified to a hydrophobic group by esterification or etherification and the other end is a hydroxyl group, such as polyalkylene glycol. Among others, compounds having an ethyleneoxide (oxyethylene) unit or propyleneoxide (oxypropylene) as a repeating unit are preferable.

Examples of the amphiphilic polyether compound include amphiphilic compounds having a structure in which the molar number of addition (number of repeating units) of the oxyalkylene unit such as an alkyleneoxide (oxyalkylene) unit is 3 or more, and include homopolymers and copolymers formed by polymerizing these structures in a linear chain or a branched chain, and compounds containing these polymeric structures and analogues thereof, ether type surfactants, and ether type plasticizers.

More specific examples of the amphiphilic polyether compound include polyethylene glycol monoalkylate, polypropylene glycol monoalkylate, polyethylene glycol monoalkyl ether, polypropylene glycol monoalkyl ether, and/or analogous compounds thereof.

Examples of the polyethylene glycol monoalkylate include polyethylene glycol monooleate, polyethylene glycol monolaurate, polyethylene glycol monopalmitate and analogues thereof.

Examples of the polypropylene glycol monoalkylate include polypropylene glycol monolaurate, polypropylene glycol monooleate and analogues thereof.

Examples of the polyethylene glycol monoalkyl ether include diethylene glycol monobutyl ether, triethylene glycol monolauryl ether, triethylene glycol monocetyl ether and analogues thereof.

Examples of the polypropylene glycol monoalkyl ether include polypropylene glycol monomethyl ether, polypropylene glycol monomyristyl ether and analogues thereof.

Among these compounds, polypropylene glycol monooleate and analogues thereof are particularly preferably used.

More specific examples of the polyalkylene glycol include polyethylene glycol and polypropylene glycol; and examples of a copolymer of polypropylene glycol (polyoxyethylene-polyoxypropylene glycol) include a block copolymer of polypropylene glycol-polyethylene glycol-polypropylene glycol, a block copolymer of polypropylene glycol-polyethylene glycol, a block copolymer of polyethylene glycol-polypropylene glycol-polyethylene glycol, and a random copolymer of polypropylene glycol-polyethylene glycol. Further, an end of the glycol chain may be a hydroxyl group as it is or may be replaced with an alkyl group or a phenyl group. These compounds may be used alone or in a mixture of two or more species.

Further, an ether type surfactant may be appropriately used as the amphiphilic polyether compound. Examples of the ether type surfactant include polyoxyalkylene alkyl ether sulfates such as triethanolamine polyoxyethylene lauryl sulfate and sodium polyoxyethylene lauryl sulfate. These compounds may be used alone or in a mixture of two or more species.

Further, the molar number of addition (number of repeating units) of the oxyalkylene unit of the amphiphilic polyether compound is preferably 3 to 100, more preferably 3 to 30, and more preferably 3 to 10 from the viewpoint of interaction with ions.

Further, the molecular weight of the amphiphilic polyether compound is not particularly limited as long as it is liquid under the conditions of normal temperature and normal pressure, but a compound having a number average molecular weight of 1000 or less is preferably employed, a compound having a number average molecular weight of 200 to 800 is more preferably employed, and a compound having a number average molecular weight of 300 to 600 is furthermore preferably employed. If the number average molecular weight is more than 1000, it is not preferable since the polyether compound may solidify under the conditions of normal temperature and normal pressure. The number average molecular weight is a value measured by GPC (gel permeation chromatography).

Further, with respect to the solubility parameter (solubility coefficient, SP value) of the amphiphilic polyether compound, a compound having the solubility parameter of 8 to 15 is suitably used, a compound having the solubility parameter of 9 to 13 is more suitably used, and a compound having the solubility parameter of 9.5 to 11.5 is furthermore suitably used.

Generally, it is thought that compounds having solubility parameter values closer to each other have a higher affinity for each other, but in conventional polymeric electrolytes such as an ion-exchange resin, a polymeric electrolyte having high ionicity and a large solubility parameter value was generally used and therefore a hydrophobic solvent having a small solubility parameter value was very difficult to use as an electrolyte solution. On the other hand, in the present invention, the present inventors have noted that a property of the counter ion of the polymeric electrolyte such as an ion-exchange resin has a large effect on ionicity of the polymeric electrolyte, and found that by modifying the polymeric electrolyte to more hydrophobic and adding a hydrophilic compound to a hydrophobic solvent, affinity and permeability between the electrolyte and the solvent are modified well. More specifically, by using an ammonium cation having a long-chain alkyl group having a long carbon chain as a counter ion of an anion group (carboxyl group, etc.) of the polymeric electrolyte, the modification becomes possible.

In addition, the solubility parameter in the present invention refers to a value δ obtained from the equation: δ = (E/V)^{1/2}, proposed by J. H. Hildebrand. In the above equation, E represents molecular cohesive energy of a liquid and V represents a molar volume. Further, this explanation is described in KAGAKU DAIJITEN (published by KYORITSU SHUPPAN CO., LTD, cut down version, 36th edition).

With respect to the dielectric constant of the amphiphilic polyether compound, a compound having the dielectric constant of 4 to 40 is suitably used, a compound having the dielectric constant of 4.5 to 30 is more suitably used, and a compound having the dielectric constant of 5 to 20 is furthermore suitably used. In addition, the dielectric constant in the present invention refers to a value obtained by an electrostatic capacitance measuring technique.

The amphiphilic polyether compounds may be used alone or in a mixture of two or more species, but the amount of the amphiphilic polyether compound to be mixed is preferably 20 to 10000 parts by weight, more preferably 50 to 3000 parts by weight, and furthermore preferably 100 to 500 parts by weight with respect to 100 parts by weight of the polymeric electrolyte. When the amount of the amphiphilic polyether compound to be mixed is less than 20 parts by weight, since the viscosity of the polymeric electrolyte is too high, the internal resistance may become large, and when the amount of the amphiphilic polyether compound is more than 10000 parts by weight, the solution resistance may become large in the case there is no electrolyte externally added.

The lipophilic compound is not particularly limited as long as it is liquid under the conditions of normal temperature and normal pressure. Preferably, the lipophilic compound also has a function as a solvent. The lipophilic compound has been difficult to use for an electric storage element application since it has a low dielectric constant resulting from its molecular structure and therefore this characteristic results in an increase in the internal resistance component and furthermore a reduction in electric conductivity. However, it is estimated that by combining the lipophilic compound (or a mixture solution of the lipophilic compound and an amphiphilic polyether compound) with the electrolyte and the metal electrodes, the special configurations of these liquids (media) and the metal electrodes, and a specific cooperative action of a matrix polymer with a functional group or an electrolyte component first exert an excellent effect of the present invention.

The lipophilic compound may be a lipophilic compound which can serve as a solvent of a salt containing ions as a carrier of charge or a lipophilic compound which can serve as a carrier of charge. These lipophilic compounds may be used alone or in a mixture of two or more species.

In the present invention, the lipophilic compound refers to an organic compound which is liquid under the conditions of normal temperature and normal pressure and is insoluble in water, and more specifically, it refers to an organic compound which cannot be dissolved in water in a concentration of 1.0% by weight or more, and the organic compound, which cannot be dissolved in water in a concentration of 1.0% by weight or more, is preferable.

The lipophilic compound is not particularly limited as long as it is an organic compound having the above-mentioned characteristics, and examples of the lipophilic compound include carboxylic esters having a long chain alkyl group, carboxylic ethers having a long chain alkyl group, and the like.

Examples of the lipophilic compounds include butyl oleate, octyl adipate, ethyl laurate, dimethyl phthalate, diethyl benzoate, di-2-ethylhexyl sebacate, and/or analogous compounds thereof.

Further, the molecular weight of the lipophilic compound is not particularly limited as long as the compound is liquid under the conditions of normal temperature and normal pressure, but a compound having a number average molecular weight of 1000 or less is preferably employed, a compound having a number average molecular weight of 200 to 600 is more preferably employed, and a compound having a number average molecular weight of 300 to 500 is furthermore preferably employed. If the number average molecular weight is more than 1000, it is not preferable since the compound may solidify under the conditions of normal temperature and normal pressure. The number average molecular weight is a value measured by GPC (gel permeation chromatography).

Further, with respect to the solubility parameter (solubility coefficient, SP value) of the lipophilic compound, a compound having the solubility parameter of 6 to 12 is suitably used, a compound having the solubility parameter of 7 to 11 is more suitably used, and a compound having the solubility parameter of 8 to 10 is furthermore suitably used.

With respect to the dielectric constant of the lipophilic compound, a compound having the dielectric constant of 4 to 40 is suitably used, a compound having the dielectric constant of 4.5 to 30 is more suitably used, and a compound having the dielectric constant of 5 to 20 is furthermore suitably used.

The lipophilic compounds may be used alone or in a mixture of two or more species, but the amount of the lipophilic compound to be mixed is preferably 20 to 10000 parts by weight, more preferably 50 to 3000 parts by weight, and furthermore preferably 100 to 500 parts by weight with respect to 100 parts by weight of the electrolyte. When the amount of the lipophilic compound to be mixed is less than 20 parts by weight, since the viscosity of the polymeric electrolyte is too high, the internal resistance may become large, and when the amount of the lipophilic compound is more than 10000 parts by weight, the solution resistance may become large in the case there is no electrolyte externally added.

Furthermore, when the amphiphilic polyether compound and the lipophilic compound are used in combination, the total amount of the amphiphilic polyether compound and the lipophilic compound to be mixed is preferably 200 to 10000 parts by weight, more preferably 50 to 3000 parts by weight, and furthermore preferably 100 to 500 parts by weight with respect to 100 parts by weight of the electrolyte. When the total amount is less than 20 parts by weight, since the viscosity of the polymeric electrolyte is too high, the internal resistance may become large, and when the amount of the lipophilic compound is more than 10000 parts by weight, the solution resistance may become large in the case there is no electrolyte externally added.

Further, when the amphiphilic polyether compound is used in combination with the lipophilic compound, the amount of the amphiphilic polyether compound relative to the lipophilic compound is preferably 5 : 1 to 1 : 5 in terms of the volume ratio, more preferably 3 : 1 to 1 : 3 in terms of the volume ratio, and furthermore preferably 2 : 1 to 1 : 2 in terms of the volume ratio.

Further, when the amphiphilic polyether compound and the lipophilic compound are used in combination, a mixture solution of the amphiphilic polyether compound and the lipophilic compound, having the solubility parameter (solubility coefficient, SP value) of 8 to 15, is suitably used, a mixture solution having the solubility parameter of 9 to 13 is more suitably used, and a mixture solution having the solubility parameter of 9.5 to 11.5 is furthermore suitably used.

When the amphiphilic polyether compound and the lipophilic compound are used in combination, a mixture solution of the amphiphilic polyether compound and the lipophilic compound, having the dielectric constant of 4 to 40, is suitably used, a mixture solution having the dielectric constant of 4.5 to 30 is more suitably used, and a mixture solution having the dielectric constant of 5 to 20 is furthermore suitably used.

In the present invention, the hydrophilic compound refers to an organic compound which is liquid under the conditions of normal temperature and normal pressure and is soluble in water, and more specifically, it refers to an organic compound which can be dissolved in water in a concentration of 1.0% by weight or more, and the organic compound, which can be dissolved in water in a concentration of 10% by weight or more, is preferable.

The hydrophilic compound is not particularly limited as long as it is an organic compound having the above-mentioned characteristics, and examples of the hydrophilic compound include ethyl alcohol, ethylene glycol, glycerol, and propylene glycol.

Examples of the hydrophilic compound include polyalkylene glycols such as polyethylene glycol, polypropylene glycol and a copolymer of polyethylene glycol and polypropylene glycol (polyoxyethylene-polyoxypropylene glycol); ester compounds such as triethanolamine polyoxyethylene lauryl sulfate, sodium polyoxyethylene lauryl sulfate, polyoxyethylene methyl glucoside, polyethylene glycol di-2-ethylhexanoate, tetraethylene glycol di-2-ethylhexanoate, and polyetherol; and analogues thereof. Among these compounds, polyethylene glycol, polypropylene glycol, and/or analogous compounds thereof is/are particularly preferably used.

More specific examples of the polyalkylene glycol include polyethylene glycol and polypropylene glycol; and examples of a copolymer of polypropylene glycol (polyoxyethylene-polyoxypropylene glycol) include a block copolymer of polypropylene glycol-polyethylene glycol-polypropylene glycol, a block copolymer of polypropylene glycol-polyethylene glycol, a block copolymer of polyethylene glycol-polypropylene glycol-polyethylene glycol, and a random copolymer of polypropylene glycol-polyethylene glycol. Further, an end of the glycol chain may be a hydroxyl group as it is or may be replaced with an alkyl group or a phenyl group. These compounds may be used alone or in a mixture of two or more species.

Examples of the ether type surfactant include polyoxyalkylene alkyl ether sulfates such as triethanolamine polyoxyethylene lauryl sulfate and sodium polyoxyethylene lauryl sulfate. These compounds may be used alone or in a mixture of two or more species.

Further, the molar number of addition (number of repeating units) of the oxyalkylene unit of the polyether compound is preferably 3 to 100, more preferably 3 to 30, and more preferably 3 to 10 from the viewpoint of interaction with ions. When the molar number of addition of the oxyalkylene unit is less than 3, the retention of driving performance may become difficult with the lapse of time since the volatility of the medium in the electrolyte is increased or the hygroscopicity of the medium is deteriorated.

Further, the molecular weight of the polyether compound is not particularly limited as long as it is liquid under the conditions of normal temperature and normal pressure, but a compound having a number average molecular weight of 1000 or less is preferably employed, a compound having a number average molecular weight of 200 to 800 is more preferably employed, and a compound having a number average molecular weight of 300 to 600 is furthermore preferably employed. If the number average molecular weight is more than 1000, it is not preferable since the compound may solidify under the conditions of normal temperature and normal pressure. The number average molecular weight is a value measured by GPC (gel permeation chromatography).

Further, with respect to the solubility parameter (solubility coefficient, SP value) of the hydrophilic compound, a compound having the solubility parameter of 10 to 20 is suitably used, a compound having the solubility parameter of 11 to 18 is more suitably used, and a compound having the solubility parameter of 12 to 17 is furthermore suitably used.

With respect to the dielectric constant of the hydrophilic compound, a compound having the dielectric constant of 5 to 60 is suitably used, a compound having the dielectric constant of 10 to 60 is more suitably used, and a compound having the dielectric constant of 20 to 60 is furthermore suitably used.

Further, when the hydrophilic polyether compound is used in combination with glycerin carbonate, the amount of the hydrophilic polyether compound relative to glycerin carbonate is preferably 5 : 1 to 1 : 5 in terms of the volume ratio, more preferably 3 : 1 to 1 : 3 in terms of the volume ratio, and furthermore preferably 2 : 1 to 1 : 2 in terms of the volume ratio.

On the other hand, the electric storage element of the present invention includes metal electrodes and a polymeric electrolyte, wherein the metal electrodes are formed so as to constitute an electrode pair, and the metal electrodes are in contact with the electrolyte and are formed on a surface of the polymeric electrolyte and within the polymeric electrolyte, and the electric storage element has a structure including a plurality of the metal electrodes. Further, the electric storage element may include an electrode layer on each side of the ion-exchange resin layer of a polymeric electrolyte, and may include a plurality of electrode layers on each side or on one side. As a specific configuration of the electric storage element, a configuration of an actuator element, in which a pair of electrode layers forms a metal electrode pair with the ion-exchange resin layer therebetween, can be employed, or a configuration, in which a plurality of metal electrodes are provided on an outer surface and/or an inner surface of a tubular ion-exchange resin, may be employed.

Further, in the electric storage element of the present invention, it is preferable that the negative electrode of the metal electrodes preferably has, at its interface with the polymeric electrolyte, a lithium alloy with a metal component contained in the negative electrode and the lithium alloy is capable of releasing lithium ions through a reversible electrochemical oxidation-reduction reaction. Since the electric storage element further includes the lithium alloy at the interface between the negative electrode and the polymeric electrolyte, an electric double layer is formed at the interface between the metal electrode and the polymeric electrolyte and furthermore an oxidation-reduction reaction of the lithium alloy occurs. Since a specific capacitance value of the electric storage element has a capacitance value as the sum of the capacitance of the electric double layer and a pseudo-capacitance through a redox reaction, the capacitance value of the electric storage element can be further increased by using the electric storage element.

The above-mentioned electric storage element, in which electrode layers form an electrode pair with the ion-exchange resin therebetween, can be obtained by publicly known methods. For example, it is possible to obtain a metal-ion-exchange resin assembly as the electric storage element by subjecting the tangible substance of the ion-exchange resin having a shape of film, plate or tube to an electroless plating process to form a metal layer on a surface of the tangible substance of the ion-exchange resin of the polymeric electrolyte, or over a range from the surface of the tangible substance of the ion-exchange resin to the inside of the ion-exchange resin and using the metal of the metal layer as an electrode layer. Further, as a method for forming the metal-ion-exchange resin assembly, for example, techniques described in International Publication WO 2005/013299 or JP-A No. 2005-175107 can be appropriately employed.

As the electroless plating method, for example, the following electroless plating method can be suitably employed. An adsorption step of adsorbing a metal complex such as a platinum complex or a gold complex on the ion-exchange resin with the ion-exchange resin swollen by being immersed in water is performed. Next, a reduction step of reducing the adsorbed metal complex with a reducing agent to precipitate the metal is performed, and furthermore a washing step of washing/removing the reducing agent may be performed as required after the reduction step.

In the electroless plating method, the cycle of the adsorption step, the reduction step and the washing step can be performed repeatedly for forming a metal layer as an electrode which has a sufficient thickness for energizing the electric storage element. In the electric storage element thus obtained, since an electrode layer grows towards the inside of the ion-exchange resin to form an electrode and a structure in which the cross-sectional profile of the electrode layer is in the shape of fractal is formed at the interface between the ion-exchange resin and the electrode layer, it is possible to have a large electric double layer at the interface between the electrode layer and the ion-exchange resin layer. Furthermore, since the electrode layer forms the fractal structure towards the inside of the ion-exchange resin layer to exert an anchor effect, the ion-exchange resin assembly has the durability against repeated bending. Further, the amphiphilic polyether compound and the lipophilic compound or the hydrophilic polyether compound and/or glycerin carbonate have been difficult to use for an electric storage element application since they have a low dielectric constant resulting from their molecular structures and therefore these characteristics result in an increase in the internal resistance component and furthermore a reduction in electric conductivity. However, it is estimated that by combining the amphiphilic polyether compound, the lipophilic compound or a mixture solution thereof, or the hydrophilic polyether compound and/or glycerin carbonate with the electrolyte and the metal electrodes, the special configurations of these liquids (media) and the metal electrodes, and a specific cooperative action of a matrix polymer with a functional group or an electrolyte component first exert an excellent effect of the present invention.

The ion-exchange resin contained in the electrolyte of the electric storage element of the present invention is not particularly limited, and a publicly known ion-exchange resin can be employed. For example, when a cation-exchange resin is used as the ion-exchange resin, those resins can be used which are obtained by introducing a hydrophilic functional group such as a sulfonic acid group or a carboxyl group into polyethylene, polystyrene, a fluororesin, or the like. As such a resin, for example, a perfluorosulfonic acid resin (trade name "Nafion," manufactured by DuPont Co.), a perfluorocarboxylic acid resin (tradename "Flemion," manufactured by Asahi Glass Co., Ltd.), ACIPLEX (manufactured by Asahikasei Co., Ltd.), or NEOSEPTA (manufactured by Tokuyama Corp.) can be used. These ion-exchange resins may be used alone or may be used in combination of two or more species.

As the thickness of the ion-exchange resin (at the time of swelling), generally, a thickness of 0.01 to 10 mm is employed, and the thickness is more preferably 0.02 to 5 mm and furthermore preferably 0.05 to 1 mm. When the thickness of the ion-exchange resin is more than 10 mm, it is not preferable because there may be cases where a distance between electrodes is too long.

Further, a solution of the metal complex used in the adsorption step of the electroless plating method is not particularly limited as long as it includes a complex of a metal of the metal layer formed by reduction, which can function as an electrode layer.

As the metal complex, a metal complex such as a complex of gold, platinum, palladium, rhodium or ruthenium is preferably used since metals having a small ionization tendency are electrochemically stable. Further, since a deposited metal is used as an electrode, a metal complex made of a noble metal which has a high current-carrying property and is rich in electrochemical stability is preferable, and a gold complex made of gold which relatively hardly causes electrolysis is more preferable.

Further, when the lithium alloy is used, the lithium alloy to be used may be a lithium alloy which is capable of releasing lithium ions during discharging and is formed from a lithium ion with a metal component contained in the negative electrode during charging. The metal with which the lithium forms the lithium alloy is not particularly limited, but because of ease of availability and ease of formation of a polarizable electrode, the metal selected from the group consisting of gold (Au), lead (Pb), tin (Sn), zinc (Zn), indium (In), cadmium (Cd), bismuth (Bi), titanium (Ti), antimony (Sb), copper (Cu), silver (Ag), iron (Fe) and nickel (Ni) is preferable. That is, the negative electrode of the electric storage element of the present invention preferably contains, as a metal component, one or more metals selected from the group consisting of gold, lead, tin and zinc. Further, since the metal with which the lithium forms the lithium alloy is also a metal contained in the metal electrode which is a polarizable electrode, it can easily form the lithium alloy at the interface between the negative electrode and the polymeric electrolyte in charging the electric storage element after repeating charge-discharge. Therefore, the capacitance of the electric storage element is hardly deteriorated even after repeating the charge-discharge.

Further, in the present invention, when a cross section in the thickness direction (direction in which a voltage is applied) of the electric storage element is observed by a scanning electron microscope (SEM), the shape of the metal electrodes existing in approximately parallel with one another and existing opposed to one another, that is, the shape of the metal electrode formed within the polymeric electrolyte by the electroless plating method, is preferably at least one of shapes of fractal, peninsula, island, icicle, polyp and coral each with a neck-shaped constriction, tree, mushroom, and indefinite shape. In addition, granular metal parts produced during the production of the electric storage element, which are not connected to an outer metal electrode and do not form a metal electrode, may exist.

When the lithium alloy is used, the negative electrode of the metal electrodes, which is a polarizable electrode, has an alloy of lithium with a metal contained in the negative electrode at the interface between the negative electrode and the polymeric electrolyte. The metal with which the lithium forms the lithium alloy may be one species or two or more species as long as it can form an alloy with lithium.

When the lithium alloy is used, since the metal component contained in the negative electrode can form a larger amount of the lithium alloy at the interface between the negative electrode and the polymeric electrolyte, the negative electrode preferably consists only of the metal with which the lithium forms the lithium alloy.

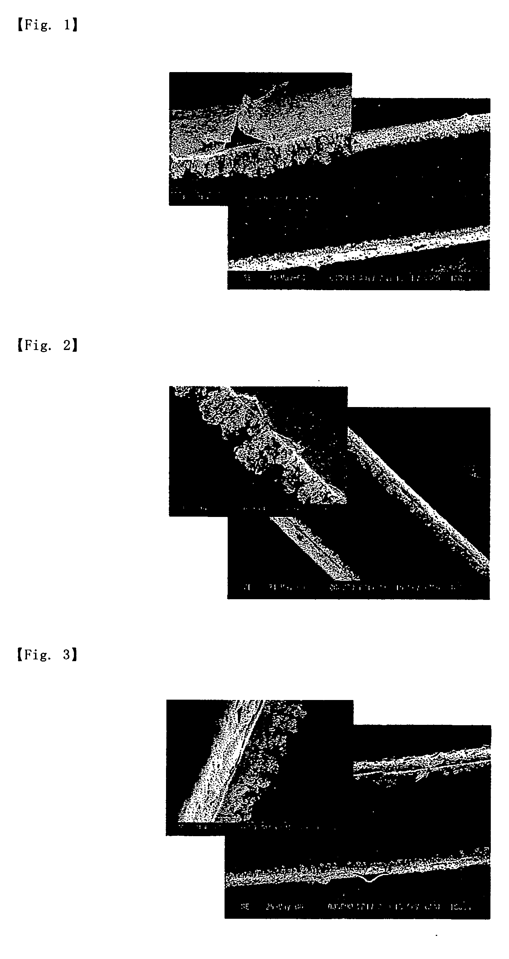

In the negative electrode, it is preferable that the interface between the negative electrode and the polymeric electrolyte be formed in a shape of projections and depressions, and it is also preferable that the electric storage element have a projecting part which is in contact with the polymeric electrolyte and constitutes the electrode component of the negative electrode in a boundary region with the polymeric electrolyte in a cross section of the electric storage element in the thickness direction. The cross-sectional profile of the projecting part may be an approximately cyclical curve and/or in indefinite shape. The projecting part may be in the shape of fractal, peninsula, island each with a neck-shaped constriction, tree, mushroom, icicle, polyp and/or coral. In addition, the island-shaped part may be approximately circular, approximately elliptic, or polygonal. Further, the boundary region is a range between a position closest to the center of the electric storage element in the thickness direction at the interface between the negative electrode and the polymeric electrolyte, and a position closest to the surface of the negative electrode at the interface, as well as a range including the interface between the negative electrode and the polymeric electrolyte, in a cross section of the electric storage element in the thickness direction. The electrode-electrolyte structure having the projecting part in the cross section in the thickness direction can be obtained with the polymeric electrolyte by an electroless plating method, and for example, a projecting part as shown in electron micrographs of Figs. 1 to 3 can be formed. In addition, Figs. 1 to 3 are SEM photographs, taken at a magnification of 7000 times (and 350 times), of the cross section in the thickness direction of the electrode-electrolyte structure as the sample, on which gold is deposited by vapor deposition in high vacuum. In Figs. 1 to 3, parts that look white are composed of metal.

Further, the negative electrode is preferably a porous metal electrode because the interface between the negative electrode and the polymer electrolyte is wide to allow formation of the metal electrodes in a larger amount at the interface. Further, when the lithium alloy is used, the negative electrode is more preferably a porous metal electrode composed only of the metal with which lithium forms the lithium alloy. Formation of the lithium alloy in a larger amount at the interface between the negative electrode and the polymer electrolyte enables the electric storage element of the present invention to have a larger specific capacity. For example, the porous metal electrode can be obtained by subjecting the polymeric electrolyte to an adsorption-reduction method in the electroless plating method.

Further, the electric storage element includes a positive electrode having its interface with the polymeric electrolyte. The positive electrode is a metal electrode capable of forming an electric double layer at its interface with the polymeric electrolyte. Further, when the lithium alloy is used for the negative electrode as described above, in the electric storage element, a reaction in which lithium forms an alloy principally occurs at the negative electrode and charge-discharge is performed at the positive electrode because of the occurrence of the formation of the electric double layer. The electric storage element may also contain a substance to absorb lithium ions at the positive electrode, but the positive electrode is preferably a metal electrode not containing a substance to absorb lithium ions since the production of such a positive electrode is easy. In addition, the electric storage element of the present invention can also form the electric double layer at the negative electrode.

The positive electrode may be a metal electrode capable of forming an electric double layer, but the material of the positive electrode is preferably the same as that of the negative electrode because of ease of production. More specifically, it is preferable that the positive electrode is a metal electrode in which, for example, a metal component of the electrode contains one or more metals selected from the group consisting of gold, lead, tin and zinc and that the composition of the metal component of the negative electrode is the same as that of the positive electrode. Moreover, the positive electrode is preferably an electrode bonded to the polymer electrolyte to prevent a gas from infiltrating into the interface between the positive electrode and the polymer electrolyte. In addition, the negative electrode is also preferably an electrode bonded to the polymer electrolyte.

Further, a solvent to be used for the solution of the metal complex is not particularly limited, but a solvent predominantly composed of water is preferable since a metal salt (metal complex) is easily dissolved in such a solvent and the solvent is easy to handle. More specifically, the solution of the metal complex is preferably an aqueous solution of the metal complex, particularly more preferably an aqueous solution of a gold complex or a platinum complex, and furthermore preferably an aqueous solution of a gold complex.

The species of the reducing agent used in the reduction step of the electroless plating method described above can be appropriately selected and used according to the species of the complex of a metal to be used in the solution of the metal complex adsorbed on the ion-exchange resin. As the reducing agent, for example, sodium sulfite, hydrazine, sodium borohydride, phosphorous acid and sodium hypophosphite can be used. These reducing agents may be used alone or in a mixture of two or more species.

The reducing agent can be appropriately selected depending on a metal species to be deposited. When the metal to be deposited by reduction is nickel or cobalt, for example, sodium phosphinate, (dimethylamino)borane, hydrazine, potassium tetrahydroborate and the like can be used as the reducing agent. When the metal to be deposited by reduction is palladium, for example, sodium phosphinate, sodium phosphonate, potassium tetrahydroborate and the like can be used as the reducing agent. When the metal to be deposited by reduction is copper, for example, formalin, sodium phosphonate, potassium tetrahydroborate and the like can be used as the reducing agent. When the metal to be deposited by reduction is silver or gold, for example, (dimethylamino)borane, potassium tetrahydroborate and the like can be used as the reducing agent. When the metal to be deposited by reduction is platinum, for example, hydrazine, sodium tetrahydroborate and the like can be used as the reducing agent. When the metal to be deposited by reduction is tin, for example, titanium trioxide can be used as the reducing agent. Furthermore, the reducing agent is not limited to the above-mentioned species, and nonmetallic acids or ions such as hydrogen, HgS, HI and I⁻ used together with a catalyst such as platinum black, salts of lower oxyacids such as Na (H₂PO₂) and Na₂S₂O₃, lower oxides such as CO and SO₂, metals having a large ionization tendency such as Li, Na, Cu, Mg, Zn, Fe, Fe(II), Sn(II), Ti(III) and Cr(II) or amalgams thereof, metal salts of low valence, hydrides such as AlH[(CH₃)₂CHCH₂]₂ and lithium aluminium hydride, diimide, formic acid, aldehyde, saccharides and L-ascorbic acid can be appropriately used.

As described above, the reducing agent can be appropriately selected according to the metal species to be reduced, but furthermore the species of the reducing agent for use can be appropriately selected in order to control the growth rate of plating, the particle size of the deposited metal, the area of contact between the metal electrode having a fractal structure and the ion-exchange resin, the electrode configuration, and flexibility of the resin after plating. In addition, the species of the reducing agent may be appropriately selected in order to maintain a preferable level of the pH of a reducing bath in the reducing step.

The concentration of a solution of the reducing agent is not particularly limited as long as the reducing agent is contained in an amount enough to attain an amount of the metal to be deposited by the reduction of the metal complex, but a concentration equal to that of a metal salt solution, used when forming metal electrodes by a common electroless plating method, can be employed. Further, the solution of the reducing agent may contain a good solvent of the ion-exchange resin. Furthermore, an acid or an alkali may be added as required when reducing the metal complex.

The electric storage element of the present invention contains a solvent and a salt within the electrolyte in contact with the metal electrodes formed so as to constitute an electrode pair. In the present invention, it is necessary that the ion-exchange resin is in a swollen state due to the amphiphilic polyether compound, the lipophilic compound or a mixture solution thereof, or the hydrophilic polyether compound and/or glycerin carbonate, which is liquid under the conditions of normal temperature and normal pressure, in order to promote ion transportation.

The degree of swelling is not particularly limited, but the degree of swelling of the electric storage element is preferably 3 to 300%, more preferably 5 to 200%, and furthermore preferably 10 to 100%. When the degree of swelling is less than 3%, an electric conductivity may be extremely low. On the other hand, when the degree of swelling is more than 300%, the electric conductivity may be deteriorated and furthermore the solution resistance may be increased because of the deterioration of the electrode density. In addition, the amphiphilic polyether compound, the lipophilic compound or a mixture solution thereof, or the hydrophilic polyether compound and/or glycerin carbonate is contained in the electrolyte, but when an electrode layer is a porous electrode, a part of the solvent may be contained in the metal electrodes with a salt.

Further, the electrolyte can be obtained by immersing an ion-exchange resin layer in a liquid of the amphiphilic polyether compound, the lipophilic compound or a mixture solution thereof, or the hydrophilic polyether compound and/or glycerin carbonate, or by heating the above-mentioned solution and then immersing an ion-exchange resin layer in the heated solution. For example, when the electric storage element is an element in which the metal electrodes are formed by subjecting the ion-exchange resin to the electroless plating process, an element, in which the ion-exchange resin is in a swollen state due to the organic compound, can be obtained by a technique of directly immersing the ion-exchange resin in a liquid of the amphiphilic polyether compound, the lipophilic compound or a mixture solution thereof, or the hydrophilic polyether compound and/or glycerin carbonate or a technique of replacing the ion-exchange resin with a solvent.

The amphiphilic polyether compound, the lipophilic compound or a mixture solution thereof, or the hydrophilic polyether compound and/or glycerin carbonate may contain, as a solvent, a component other than an amphiphilic polyether compound and a lipophilic compound, or a hydrophilic polyether compound and/or glycerin carbonate. Examples of the solution containing the above component other than an amphiphilic polyether compound and a lipophilic compound, or a hydrophilic polyether compound and/or glycerin carbonate include solutions obtained by mixing the solution appropriately with an organic solvent other than the amphiphilic polyether compound and the lipophilic compound or the hydrophilic polyether compound and/or glycerin carbonate. A solvent to be mixed with the amphiphilic polyether compound and/or the lipophilic compound, or the hydrophilic polyether compound and/or glycerin carbonate is not particularly limited, but a solvent which has a desired potential window and is hardly volatilized with the lapse of time under the conditions of normal temperature and normal pressure is preferable.

Examples of the hard-to-volatilize solvent include polyalkylene glycols such as polyethylene glycol, polypropylene glycol and a copolymer of polyethylene glycol and polypropylene glycol (polyoxyethylene-polyoxypropylene glycol); and glycerol carbonate. Among these polymers, polyethylene glycol, polypropylene glycol, and glycerol carbonate are particularly preferably used.

Further, when the solution containing a component other than the amphiphilic polyether compound and the lipophilic compound, or the hydrophilic polyether compound and/or glycerin carbonate is used, the total amount of the amphiphilic polyether compound and the lipophilic compound, or the hydrophilic polyether compound and/or glycerin carbonate in the solution is preferably 5 to 80% by weight, more preferably 10 to 60% by weight, and furthermore preferably 20 to 50% by weight.

Furthermore, as the technique of replacing the ion-exchange resin with a solvent, for example, there is a technique in which the ion-exchange resin is swollen in advance with a solvent for swelling and then the solvent is replaced with the amphiphilic polyether compound, the lipophilic compound, or the mixture solution thereof, or the hydrophilic polyether compound and/or glycerin carbonate, and by this technique, the electrolyte of the present invention can be obtained. Further, the amphiphilic polyether compound, the lipophilic compound, or the mixture solution thereof, or the hydrophilic polyether compound and/or glycerin carbonate, which is used as the solvent for swelling, may be left in the element and used as it is. This technique is preferably used in the case where the ion-exchange resin is not swollen even in the liquid of the amphiphilic polyether compound, the lipophilic compound, or the mixture solution thereof, or the hydrophilic polyether compound and/or glycerin carbonate. In addition, the solvent for swelling is not particularly limited as long as it is a solvent with which the ion-exchange resin can be swollen and which can be replaced with the amphiphilic polyether compound, the lipophilic compound, or the mixture solution thereof, or the hydrophilic polyether compound and/or glycerin carbonate. In addition, in the present invention, the above-mentioned swelling does not include infinite swelling.

The salt contained within the electrolyte is not particularly limited as long as it can be dissolved in the amphiphilic polyether compound, the lipophilic compound or the mixture solution thereof, or the hydrophilic polyether compound and/or glycerin carbonate, which is liquid under the conditions of normal temperature and normal pressure. When the polymeric electrolyte forms a counter ion with a cation, salts of a monovalent to trivalent cation can be used, and particularly, monovalent cations such as Na⁺, K⁺, and Li⁺ are preferably used since these ions can transport charges efficiently. Further, particularly when the salts of the above-mentioned cations are used, an alkyl ammonium ion having a large ionic radius is more preferably used since it is suitable for swelling with the solvent.

Examples of the alkyl ammonium ion include CH₃N⁺CH₃, C₂H₅N⁺H₃, (CH₃)₂N⁺H₂, (C₂H₅)₂N⁺H₂, (CH₃)₃N⁺H, (C₂H₅)₃N⁺H, (CH₃)₄N⁺, (C₂H₅)₄N⁺, (C₃H₇)₄N⁺, (C₄H₉)₄N⁺, H₃N⁺(CH₂)₄N⁺H₃, CH₂=CHCH₂N⁺HCH₃, H₃N⁺(CH₂)₄N⁺H₂(CH₂)₄N⁺H₃, CH≡CCH₂N⁺H₂, CH₃CH (OH) CH₂N⁺H₃, H₃N⁺(CH₂)₅OH, H₃N⁺CH (CH₂OH)₂, (HOCH₂)₂C (CH₂N⁺H₃)₂, C₂H₅OCH₂CH₂N⁺H₃, and ammonium ions having a substituent of an aliphatic hydrocarbon, and ammonium ions having an alicyclic hydrocarbon. These ions may be used alone or in a mixture of two or more species.

More specific examples of the salts include 1-ethyl-3-methylimidazolium tetrafluoroborate, tetramethylammonium chloride, tetraethylammonium acetate, and N,N-diethyl-N-methyl-N-(2-methoxyethyl)ammonium bis(trifluoromethanesulfonyl)imide. These compounds may be used alone or in a mixture of two or more species.

The concentration of the salt is not particularly limited as long as the concentration is equivalent to or more than an amount of a functional group of the ion-exchange resin, but the concentration is preferably 0.01 to 1.0 mol/l, more preferably 0.05 to 0.5 mol/1, and furthermore preferably 0.1 to 0.25 mol/l in order to achieve swelling more adequately. In addition, an ionic liquid can be used as the salt. Further, if these salts remain as it is without performing ion exchange, since these salts are easily decomposed by an electric current at a voltage of ±3 V or more, the ion-exchange resin needs to be adequately washed with a solvent after the ion exchange.

The thickness of the swollen electric storage element is generally 0.01 to 10 mm, more preferably 0.02 to 5 mm, and furthermore preferably 0.05 to 1 mm.

The electric storage element can have a known size, for example, a size of 7.3 mm × 4.3 mm × 2.0 mm. For example, the electric storage element may be usually 10 mm or more, and preferably 20 mm or more, or 25 to 50 mm in height, and may also be usually 10 mm or more, and preferably 20 mm or more, or 25 to 50 mm in width. Further, the electric storage element of the present invention may be a cylindrical storage component with a case having a size of 10 mmφ × 16 mmL, φ8 × 5 L, 4φ × 7 L, 5φ × 2.8 L, 5φ × 3 L or the like.

On the other hand, the electric storage element of the present invention uses the metal electrodes in the positive electrode and the negative electrode, but as described above, it has a specific capacitance as the sum of an electric double layer capacitance by the electric double layer formed at the interface between the electrodes and a pseudo-capacitance through an oxidation-reduction reaction. Therefore, the electric storage element of the present invention can have a larger capacitance than the capacitor in which conventional metal electrodes are used. The electric storage element can be used as an element having a specific capacitance of 1 to 100 F/cm³, for example, and it is preferably used as an element having a specific capacitance of 10 to 100 F/cm³, and more preferably a specific capacitance of 20 to 100 F/cm³. In this manner, it becomes possible to obtain an electric storage element whose specific capacitance is 20 F/cm³ or more, which has been previously difficult, with ease by using the electric storage element of the present invention. In addition, the specific capacitance is a numeric value measured by a constant current discharge method and a value measured according to the EIAJ (Electronic Industries Association of Japan) Standard No. EIAJ RC-2377, issued by EIAJ (established in April, 2000, Test method for electric double-layer capacitor, 3.3.1, Constant current discharge method).

Further, the electric storage element can be used as an element having an energy density of 1.0 to 174 (Wh/Kg), and it is preferably used as an element having an energy density of 17.4 to 174 (Wh/Kg), and more preferably an energy density of 24.8 to 174 (Wh/Kg). In this manner, it becomes possible to obtain, with ease, an electric storage element whose specific capacitance is 20 (F/cm³) or more, which has been previously difficult, by using the electric storage element of the present invention.

### (Structure of electric storage element)

The electric storage element of the present invention can be assembled as an electric storage component by a method in which an electric storage element including a polymer electrolyte and two polarizable electrodes formed with the polymer electrolyte sandwiched therebetween is laminated, and the laminated element is folded or wound to be formed into a coin shape or a laminate shape, and the formed electric storage element is housed into a container such as a can or a laminate pack. The can is sealed and the laminate pack is heat-sealed into an electric storage component. Further, in the above method, the container can be filled with a specific electrolyte solution prior to the can sealing or heat-sealing of the container into an electric storage component. The electric storage element of the present invention is housed in a bottomed cylindrical exterior case, and an open end of the exterior case is sealed with a sealing material made of an elastic member, and thereby an electric storage component as a chip component can be obtained. An insulating material having a small coefficient of linear expansion may be filled in the case in which the electric storage element of the present invention is housed.

The electric storage element of the present invention may be any one of elements of the types described below: a coin-type element which is sealed with a metal cover via a gasket; a wound type element which is sealed by housing an element, wound between the positive electrode and the negative electrode with a separator therebetween, in a metal case along with the electrolyte solution; and a laminate-type element where an element laminate is incorporated, which was formed by laminating the elements between the electrode as the positive electrode and the negative electrode with a separator therebetween. When the laminate-type element is employed, the electric storage elements may be laminated with anodes placed upon one another and cathodes placed upon one another.

The electric storage element of the present invention can be a laminated solid electrolytic capacitor of a large-sized flat plate. Further, in the electric storage element of the present invention, the metal electrode can be a U-shaped or tubular metal electrode. The tubular metal electrode can be in the shape of a circular tube, a triangular tube, a square tube, a rectangular tube, or a polygonal tube. In the electric storage element of the present invention, the shape of the electric storage element itself is arbitrary, and when the shape has an angular part, a curved surface with a prescribed curvature can be formed at the angular part in order to prevent damages or current leakage failures due to distortion caused by thermal stress, mechanical stress or a difference in thermal expansion coefficients between the electric storage element and a resin exterior casing.

Further, the electric storage element of the present invention can be an electrode-laminated electric storage component or an oval cross-sectional wound electric storage component. In the case of winding the electric storage element, a vinylon nonwoven fabric predominantly composed of a vinylon fiber can be used as a separator, and the electric storage element wound with the separator sandwiched between the wound element and the next-wound element can be used as a wound electric storage component. In the wound electric storage component, an insulating protection layer may be provided on the peripheral face of the wound electric storage element. In the electric storage element having a wound configuration, since a linear body continuously intervenes in a meandering state in the winding length direction of the electric storage element, the linear body can also be used as a lead. In the case of using the electric storage element of the present invention as the wound electric storage element, a tape for fixing the winding end may be shorter than the periphery of the capacitor element.

The electric storage element of the present invention may be configured such that a plurality of electric storage elements are aligned as one component and integrally packaged to be formed in an array shape. In addition, in the electric storage element, an electrode having a grid-like pattern is formed on a single sheet-like solid electrolyte to obtain an electric storage element at each square of the grid. The surface of each of cathode layers and a cathode lead frame may be bonded to a metal wire using a wire bonder, or a metal foil piece may be bonded to at least part of the surface of each of the cathode layers, and then the surface of the metal foil piece may be bonded to the cathode lead frame with the metal wire using the wire bonder.

In the button-shaped electric storage component, a bottom part of the metal container is bonded to the top cover part thereof to be sealed by use of an insulating ring gasket, so that the electric storage element can be put into the metal container.

After covering the surface of the electric storage element with a resin, the electric storage element may be inserted into a bottomed cylindrical aluminum case, and the opening of the case may be rubber-sealed by drawing, and the electric storage element may be subjected to aging to form an electric storage component. In addition, a sealing power can be appropriately improved by improvement in physical properties of the sealing member. In addition, the sealing member may be formed to have a double-layer configuration of a first layer which is disposed on the electric storage element side and made of a material through which a hydrogen gas is not permeated or is hardly permeated, and a second layer which is disposed on the outer surface of the electrolytic capacitor and made of an elastic material through which a hydrogen gas is more easily permeated than the first layer. At the time of housing the electric storage element in the case, pressure grooves may be formed on the peripheral face of the case so as to sandwich the first layer of the sealing member between an upper part and a lower part to seal the opening. Further, the electric storage element may be configured such that the first case is housed in the second case and the opening of the second case is sealed with an elastic member such as a rubber and a lead terminal of the electric storage element runs through the elastic sealing member to be pulled out to the outside.

In the electric storage element of the present invention, at least two electric storage elements, each including a solid electrolyte and two metal electrodes formed with the solid electrolyte sandwiched therebetween, may be laminated. The electric storage element may be configured to cover the laminate of the electric storage elements with an insulating exterior resin such that part of an anode terminal connected to the electrode layer as the anode of the electric storage element and a cathode terminal connected to the electrode layer as the cathode via a conductive adhesive are exposed to the outer surface. The exterior resin can be used as the exterior case by thermal curing of a thermosetting resin such as an epoxy resin. The laminated electric storage component is preferably processed in such a manner that edges of the lead frame are chamfered, namely the edge parts are partially ground into a flat shape or a round shape, so as to mitigate the concentration of stress of the element around the edge parts. Moreover, the lead frame outside the exterior resin may be bent along the exterior resin to be used as the external lead so as to give the laminated electric storage component. Moreover, as for the exterior resin, the anode lead face on the anode lead wire side and the face opposed to the anode lead face may be ground.

Further, in the case of forming the exterior of the electric storage element, a configuration may be applied in which the resin is filled to form an exterior resin part in a pyramid or circular cone shape at the cathode lead part using a mold and the exterior resin part is then broken and removed to expose the electrode of the electric storage element.

As the method for forming the exterior resin, generally, an epoxy thermosetting resin can be used to form the exterior resin by dip molding (lead-wire type) or mold molding (chip type).

Further, the side face of the electric storage element may be covered with a resin, and when the solid electrolyte layer is projected more than the electrodes, the projecting part may be buried using a thermoplastic resin. Further, the electric storage element of the present invention can be provided with an insulating resin layer on a surface of a thin part of the solid electrolyte layer since the provision of such a layer improves a withstand voltage of the corner parts, edge line parts and the like.

In the configuration of the electric storage component, the electrode terminal can be connected to the top of the metal electrode. A typical example of the method for connecting the electrode terminal to the metal electrode is a method of using a conductive adhesive including a carbon paste and/or a silver paste to connect the electrode terminal so as to allow passage of a current. Further, in connecting the electrode terminal, the carbon paste, the silver paste or a metal member may be intervened for connecting the metal layer to the electrode terminal. Moreover, the electric storage component is capable of controlling an electrochemical reaction caused by control of potential difference between the terminal and the electrode or a potential difference current by providing a cover layer on a surface of the metal electrode, providing an electrochemical oxide film layer on the electrode terminal (electrode tab part), or providing a prescribed ceramic or insulating resin layer (epoxy resin, polyamide, polyimide, polyethylene, polypropylene, etc.) on a surface of the electrode terminal made of a metal such as aluminum. In addition, the electrode terminal can be processed with a mixture of a solvent and a specific organic compound such as polypyrrole or styrenesulfonic acid to allow reduction in current leakage. Further, instead of providing the electrode terminal, a foil of a metal such as copper may be attached to form a current collecting part to which the lead may be connected. The electrode terminal preferably has cyclic-bending strength. The electrode terminal may be wire-shaped or flat. An impurity in the oxide film (defect of the oxide film) is preferably reduced for preventing current leakage. Moreover, in the application requiring mechanical strength such as terminal strength, which is sufficient for withstanding device mounting, a nickel-based metal (42 alloy, etc.) has been used. The anode terminal as the electrode terminal may be formed in the shape of approximately V-block with a V-shaped groove so as to engage with the anode pole from the direction perpendicular to an axis line of the anode pole.

It is also possible to use a tab terminal for an electric storage element, including a flat part for mounting the electric storage element, a round bar part continuing to the flat part, and a lead wire to be fixed to the round bar part via a welding part.

In the electric storage component, a metal foil may further be disposed on the metal electrode to provide a leader electrode part. The leader electrode parts may be piled to form a multi-layer part, which may be connected with a lead part. Moreover, the surface of the metal foil roughened by etching process can be made to adhere to the metal surface.

Further, an electrode lead pin may be formed at one end of the metal electrode. An implant end of the metal electrode can be formed to have a curved face raised in a roof shape or an articulated face. The implant end of the electrode lead pin is raised in a roof shape which is selected from pyramid, circular cone, dome, semicylindrical, gable and hip roof shapes, and the electrode lead pin can be implanted at the top or edge part of the roof shape. When the implanted electrode lead pin or the electrode lead wire is provided with a plate for preventing the solid electrolyte from crawling up, the crawling-up prevention plate may be passed through the electrode lead pin or the electrode lead wire so that the projecting part of the plate abuts against the face of the electric storage element.

One end of the L-shaped leg part of the anode terminal may be further bent toward the outside of the L-shape to be welded to the anode lead pin so that the inner face of the L-shaped leg part of the anode terminal can be brought into intimate contact with the exterior resin layer.

When a chip-type component is used as the electric storage component, an external anode terminal is welded to the lead connected to the electrode terminal or the multi-layer part, and after the element has been packaged by transfer molding using an epoxy resin, portions of the external terminals of both the anode and the cathode projecting from the external resin are bent along the exterior resin and then shaped to form a chip-type electric storage component. Moreover, on the cathode lead face in the exterior resin layer where part of the electrode terminal of the cathode is exposed to the outside, a surface conductor layer may be formed, and either or both of a voltage application process (aging process) at an elevated temperature and a heating process in an elevated temperature atmosphere may be performed, and then the surface conductor layer may be removed.

In the electric storage of the present invention, an external electrode may be formed, which includes a metal layer directly formed on a surface of the exterior resin covering the electric storage element, and is electrically connected with the anode electrode and the cathode electrode of the electric storage element. In addition, the external electrode may be formed by providing a base metal layer including an electroless plated metal layer in an external electrode forming part including exposing parts of an anode lead wire and/or a cathode lead layer at the exterior resin. In addition, the connecting part may be subjected to the electroless plating for connecting the lead wire to the external electrode or the electrode terminal.

The external anode terminal may be formed in the following manner. After the external anode lead frame has been welded to the anode lead implanted at the anode, the anode lead face including the welding point is molded to form an insulating member, and then the external cathode lead frame led out from the insulating member is cut off and bent along the insulating member.

Further, the cathode terminal and the anode terminal may be provided in the following manner. The cathode terminal plate having a U-shaped cross section is fit to the bottom face and the side face of the cathode lead layer, and a resin external casing is formed on the peripheral face of the electric storage element excluding the cathode terminal plate, and the anode terminal plate is laid on the resin exterior casing so as to be opposed to the cathode terminal plate on the anode lead side.

As for the electric storage component using the electric storage element of the present invention, a mold release agent may be applied on the anode lead, and after applying the mold release agent onto the exposed face of the cathode terminal plate, the electric storage element may be immersed into a resin solution and taken out of the resin solution, and the resin solution may be dried to form the resin exterior casing toward the upper face side, including the side face and the step part, of the electric storage element. The anode terminal plate having a pair of flanges on the opposing side edges may be mounted on the upper face side of the electric storage element in such a way that the flanges are engaged with the step part. Thereafter, the anode terminal plate may be connected to the anode lead, and a mold release agent applied onto the cathode terminal plate and the anode lead may be removed to form the resin exterior casing while electric conductivity is secured. Further, the flange may have a U-shaped cross section.

The chip-type electric storage component may be obtained in the following manner. The anode-side step part and the cathode-side step part at the bottom of the electric storage component, each having a prescribed depth, are respectively formed on the anode side and the cathode side. After the cathode terminal plate formed in the L-shape is attached on an area from the cathode-side side face to the cathode-side step part of the electric storage element, the mold release agent is applied onto the cathode terminal plate, and the electric storage element is immersed into a resin solution and taken out of the resin solution, and the resin solution is dried to form the resin exterior casing on the peripheral face, including the anode-side step part, of the electric storage element. Next, the anode terminal plate bent in the L-shape is attached on an area from the anode-side side face to the anode-side step part, and the anode terminal plate is provided to obtain the electric storage component. In addition, an insulating resin-impregnated part, in which the anode is impregnated with an insulating resin, may be formed in the vicinity of the end face of the anode body on the anode external electrode layer side, and the chip-type electric storage component may be configured such that the anode and the anode external electrode layer are electrically connected to each other in a region of the insulating resin-impregnated part formed.

The electric storage component using the electric storage element of the present invention may be configured in the following manner. The anode leading part is provided on the whole of the electrode in the electric storage element, and as this anode leading part, a bending part and a connecting part are provided in an extended part of a part provided with a resist film for masking, and furthermore, a comb terminal may be separately connected to the connecting part provided with the cathode conductor layer and the anode leading part. Moreover, the lead wire for anode used for the electric storage element using the electric storage element of the present invention may be an anode lead wire with part of the edge line part on the leading face side formed in the R-shape.

In the case where the exterior is formed using a resin in the electric storage element of the present invention, a damp-proof coating material may be applied onto the surface of the exterior resin. Further, a liquid-repellent resin such as a water-repellent resin may be applied onto each part constituting the electric storage component of the present invention to such an extent that humidity of the solid electrolyte and the electrodes is not inhibited. A protecting layer made of an insulting material or the like may be formed at the root of the lead to prevent short-circuit phenomenon or corrosion.

In addition, in the case of using an electric storage element laminate formed by laminating a plurality of electric storage elements, the laminate can also be configured so as to have the cathode layer on one side face of the outer package member and the anode layer on the other side face thereof.

In addition, in the electric storage element, the corner part of the metal electrode can also be adequately covered with the conductive polymeric layer to enable prevention of short circuit.

Moreover, a multi-layered electrode layer obtained by further forming a carbon layer on the metal electrode of the electric storage element and applying a silver paste on the carbon layer, may be formed.

In the electric storage component, a current collecting plate may further be provided. The current collecting plate may be formed of platinum or a conductive rubber such as a conductive butyl rubber, or formed by thermal spraying of a metal such as aluminum or nickel. The current collecting plate may be provided with a metal mesh on one face of the electrode layer.

In the electric storage component, when the laminated electric storage component is to be assembled, cells in number according to required withstand voltage can be laminated alternately with gaskets or spacers of Teflon (registered trademark) and the laminate is sandwiched between end plates for cramping so that a sealed structure can be formed. In addition, at this time, each of the end plates is separated into a cramping plate and a current collecting plate, and a flexible sheet is sandwiched between the cramping plates and the current collecting plates, and the upper and lower cramping plates are cramped with a bolt and the current collecting plates and the electric storage element are pressed from above and below via a flexible sheet for sealing.

In the electric storage of the present invention, at least one depression on at least one face of the electrode may be provided such that the depression does not reach other electrodes in order to facilitate the immersion into a solution.

Further, in the case where the electric storage component is formed in the winding shape, the electric storage component has a configuration in which the electric storage element is housed in a case made of a metal such as aluminum or a case made of a synthetic resin and the case is sealed. For example, the electric storage element is housed in a bottomed cylindrical exterior case made of aluminum or the like and a space between the exterior case and the electric storage element is filled with a resin which has hygroscopicity at the time of curing, to form a resin layer on at least the peripheral face of the electric storage element. In addition, when a non-aqueous organic solvent is used as the electrolyte in the electric storage element, the remnant air amount is preferably less than 5% in the sealed structure. Further, in the electric storage component, the use of a sealing material obtained by combining a hard member with an elastic member can prevent mechanical stress to be applied to the lead wire from being transmitted inside and can prevent moisture from coming inside.

A thin part may be provided at the main part of the metal case such that an insulating sleeve captures ions in an electrolyte solution when an opening is created in the thin part and the electrolyte solution exudes from the opening, and the electric storage element may be housed in the metal case and the metal case may be filled with the electrolytic solution, and the insulating sleeve may cover and adhere to the metal case.

In addition, the oxidation film can also be formed on the lead in the electric storage component. A water-repellent resin or the like can be formed in the bonded part of the lead to prevent the solid electrolyte from adhering to the lead. An epoxy resin or the like can also be formed at the root part of the bonded lead, and thereby, the lead root part can be reinforced so as not to receive stress and occurrence of defect in the oxidation film can be suppressed to further reduce current leakage failures.

The electric storage component may have a known configuration, and may be appropriately provided with an insulating gasket, and further, publicly known aging can be performed by application of a predetermined voltage at a predetermined temperature after sealing.

The electric storage component may include a plurality of plus terminal groups in which the top of each of aluminum lead frames formed in the shape of a comb is bent.

In the electricity storage of the present invention, an electric storage element sheet obtained by forming the electrode in a grid shape on the solid electrolyte is cut along each square of the grid to obtain an electric storage element, and for forming the electric storage element, the electrode of the obtained electric storage element may be bonded to the electrode lead terminal.

The electric storage element of the present invention may contain a surfactant in a solution contained in the solid electrolyte for improving wettability and an impregnation ability.

In the case where the electric storage element of the present invention is housed in the insulating container, in order to greatly decay mechanical vibration and impact which are transmitted to the electric storage element, a gap between the electric storage elements or a gap between the electric storage element and the insulating container may be filled with a cushion material represented by a gel insulating material or an elastic material.

### (Applications)

The electric storage element of the present invention has a larger capacity and a higher charge density than those of the conventional capacitor. Therefore, in the application of a publicly known electric double-layered capacitor, the electric storage element of the present invention can reduce its footprint and/or its size/weight. In particular, since the electric storage element of the present invention is a small-sized and lightweight element, the element can be suitably used as the electric storage element for a power source of potable mechanical equipment and a stationary power source with a large capacity. Furthermore, the electric storage element of the present invention can be suitably used as a power source for driving a next-generation low-emission vehicle, a power source of automobile electrical components, a storage power source and/or an auxiliary power source of natural energy power generation, a power source of a medical device capable of implantation, a power source for memory back up of a mobile electronic device, a power source of a mobile clock, a charger for quick charge, a power source of a digital camera, an electric toy, and a power source of mobile home electric appliances. Hereinafter, specific applications will be described in more detail.

Since the electric storage element of the present invention has characteristics of being small-sized and lightweight, it is suitable as the power source of potable mechanical equipment. Further, since the electric storage element of the present invention can reduce a footprint of a power source even when a power source with a large capacity is required, it is also suitable as the stationary power source with a large capacity. Particularly, the electric storage element of the present invention can be suitably used for a power source or an auxiliary power source for automobiles and motorbikes as next-generation low emission vehicles including an HEV, an electric automobile and a hybrid automobile which use the electric storage element of the present invention, a power source of a super power type power module for an electric automobile or the like, a power source of information communication devices, typified by a mobile phone, a paper battery for an identification card or the like, a solar power generation energy storage system in combination with a solar cell, and a load leveling power source in combination with a battery. Furthermore, the electric storage element of the present invention can be suitably used as a capacitor for an electric automobile including a fuel cell, a capacitor, and a current output type switching regulator. Moreover, since the electric storage element of the present invention is lightweight, a power source of automobile electrical components such as a car audio using the electric storage element of the present invention can improve fuel consumption of a vehicle. Further, a storage power source and/or auxiliary power source of natural energy generation using the electric storage element of the present invention, typified by a photovoltaic power generation system, a wind power generation system, a wind-photovoltaic hybrid power generation system, and a wave activated power generation system, can be suitably used as a small footprint power source having a large capacity. Since the electric storage element of the present invention is lightweight, an implantable medical device using the electric storage element does not put a large burden on a human body in terms of weight, and can thus be suitably used. Since the electric storage element of the present invention is lightweight, the following power sources are superior in portability: power sources/power sources for memory backup of mobile electronic devices using the electric storage element of the present invention, typified by a mobile personal computer, a mobile phone, a timer and a clock function for a power source; a power source/auxiliary power source of a video camera; a power source/power source for countermeasure against instantaneous power failure of a mobile terminal, a personal computer, especially a laptop; a power source for a mobile clock using the electric storage element of the present invention; a power source circuit of a personal computer which is superior in life, temperature characteristics and high frequency characteristics; a charger for quick charge using the electric storage element of the present invention; a power source of a digital camera using the electric storage element of the present invention; a power source of an electric toy using the electric storage element of the present invention; and a power source of mobile home electric appliances using the electric storage element of the present invention, typified by an electric shaver and an electric pot.

The electric storage element of the present invention can be used in applications other than the applications of the publicly known electric double-layered capacitor since it has a small size and a large capacity. Specifically, the electric storage element of the present invention can be suitably used as a power source or an auxiliary power source of an uninterruptible power supply system, an outdoor installation device such as a house electric storage system, a power source circuit of an automobile electric equipment connected in parallel between the battery and the DC-DC converter, a flyback transformer used in a cathode ray tube used for a switching regulator, a motor control regulator, a computer electronics, a television receiver and the like, electric devices such as an audio amplifier, a serge protector and a resistance spot welder, cogeneration equipment, a home power generation system, an X-ray image pickup panel, a high-voltage phase advancing capacitor (capacitor for use in electric power facilities, an oil-impregnated paper film capacitor), destructive equipment for destroying an object to be destroyed such as a bedrock, an escape system at the time of submersion of a vehicle under water, an X-ray image pick-up device arranged to obtain an X-ray image (latent image) as an image signal, a battery-free watch, a display device using a display panel, a liquid crystal display device, an image display using a matrix liquid crystal display device cathode ray tube for use particularly in a projector or the like, a disposable camera, a resonant label pasted on a commercial product or the like for being theftproof, a flash or a stroboscopic device, and a luminescent display.

In particular, since the electric storage element of the present invention has a large capacity, it can be suitably used as a source of big power built in home electric appliances, machine tools or an electric automobile; a storage device of facilities for electricity reception/transformation, or facilities for power distribution, and an auxiliary electric storage unit for an energy conversion/storage system. The electric storage element of the present invention can also be used for a high-pressure application by laminating the elements.

Since the electric storage element of the present invention has a small size and a large capacity and therefore devices using the element can be downsized, it can be suitably used for a control module for use in an electric rolling stock driving device and an inverter device, especially a small sized water-cool control module having high cooling efficiency. In addition, with the above-mentioned properties, the electric storage element of the present invention can be suitably used for an acceleration sensor unit, a gas sensor for measuring an exhaust gas and an inflammable gas, and a gas concentration controller. Further, the electric storage element of the present invention can also be suitably used as a heating resistor type air flow rate measuring apparatus in the form of a three-terminal electrochemical device.

Since the electric storage element of the present invention has a small size and a large capacity and low equivalent series resistance, it can be suitably used for a semiconductor package with the electric storage component mounted on the top layer thereof as a chip component, and a printed circuit board with the electric storage element incorporated thereinto. In the printed circuit board with the electric storage element incorporated thereinto, a printed circuit board where the electric storage element has been surface-mounted or embedded thereinto is suitable for reducing a size and cost of an electronic device and improving a function of an electronic device for which the printed circuit board is used. Therefore, since the electric storage element has a small size and a large capacity and low equivalent series resistance, it can be suitably used for a memory device, especially a DRAM (dynamic random access memory), an MMIC (monolithic microwave integrated circuit), and a nonvolatile ferroelectric memory device. Further, since the electric storage element has a small size and a large capacity and low equivalent series resistance, it can be suitably used for a circuit board with a built-in LCR, a filter circuit such as a noise filter, a ferroelectric memory, a perovskite ferroelectric substance, a thin semiconductor device such as an IC (integrated circuit) card, an FeRAM using the ferroelectric substance, a light emitting element array of an organic EL element, IC chips of the IC card or the like, a semiconductor device having a ferroelectric electric storage element, and a switching element for switching electric power.

Furthermore, the electric storage element of the present invention is applicable to the field requiring an ESR value for smoothing a power source of electric/electronic equipment or for noise removal, at high frequency. Further, since the electric storage element has the function of inhibiting a high frequency as a noise content generated by a converter or an inverter, it is also suitable as a noise filter. Accordingly, since the electric storage element is easy to decrease in size and has a large capacity and low equivalent series resistance, devices using the element can be reduced in size, and since the element can be used for a noise filter, it can thus be suitably used as a plasma potential measuring apparatus, and can further be suitably used as a tactile sensor by being provided along with an LC series resonant circuit. Moreover, with such characteristics, the electric storage element of the present invention can also be suitably used for a photo voltage sensor for measuring a voltage utilizing an electro-optic effect (Pockels effect), a transformer for an optical conversion-type instrument, high frequency radio equipment, an impedance matching device suitably performed in association with an impedance matching antenna, a directional antenna and the like in high frequency equipment, such as a satellite broadcasting receiver or wireless LAN, where a frequency of a signal to be handled is about 400 MHz to 20 GHz (UHF to SHF band), a filter component used in mobile communication equipment such as a mobile phone, and a tuner for television signal reception.

Further, the electric storage element of the present invention can be practically integrated with a housing, a box, an undercarriage, a chassis, a vehicle body, a divider, a support, a cover or a casing in home electric appliances, devices, facilities, measuring equipment, automobiles including an electric automobile or motorbikes, by bonding the electrode layer to a bendable metal plate to connect the metal plate, or by direct bonding using a silver paste. Since the electric storage element has a small size, a large capacity, and is superior in reduction in footprint, the housing, box, chassis, divider, cover and casing, having been practically integrated with the electric storage element of the present invention, can be used for an undercarriage, a chassis, or a vehicle body of an electric automobile, an electric bicycle, an electric wheel chair, an electric caster walker, an electric scooter, an electric running machine, or an electric golf car, a package case of a laptop, a perm type personal computer, a mobile phone or electric tools, or a street-lamp pole for generating power using solar energy.

Further, other than the use of the electric storage element of the present invention for a power source, the electric storage device of the present invention can be used in water supply to a boiler in an electric power plant or the like, in production of pure water used for a semiconductor production process and fuel cell power generation, in production and circulating use of water for a cooling tower, and in a desalting apparatus used for collecting various drain water. The use of the electric storage element allows removal of various species of ions in raw water and also removal of silica to obtain desalted water or pure water. Moreover, even when an origin or properties of raw water are changed, the device can serve as a desalting apparatus capable of corresponding to such changes without changing the pre-treatment to produce desalted water or pure water having stable water quality, so as to stably produce secondary pure water (ultra pure water).

Furthermore, the electric storage element of the present invention can be used for an electrochemical element applicable to displays. More specifically, the electric storage device of the present invention can be applied to the electrochemical element by forming an active matrix type light-emitting element array, in which unit pixels including a light-emitting element including a substrate; a pair of comb-shaped electrodes provided on the substrate; and a light-emitting layer, which is provided in contact with the comb-shaped electrodes and contains a luminescent substance and an electrolyte, a transistor for current control and the electric storage element are arrayed in a matrix form to apply the electric storage element of the present invention to a display.

### EXAMPLES

Hereinafter, examples specifically showing constitutions and effects of the present invention will be described.

### [Example 1]

### (Preparation of ion-exchange resin membrane (a))

Using an ion-exchange resin membrane (fluoroplastic ion-exchange resin: perfluorocarboxylic acid resin, "Flemion," manufactured by Asahi Glass Co., Ltd., dried film thickness: 0.14 mm, ion exchange capacity: 1.4 meq/g), the following cycle of the steps (1) to (3) were repeated six times to obtain an ion-exchange resin membrane (a) including a pair of metal electrodes formed with the ion-exchange resin sandwiched therebetween.
• (1) Adsorbing step: the ion-exchange resin membrane (a) was immersed in an aqueous dichlorophenanthroline gold chloride solution for 12 houses to adsorb a dichlorophenanthroline gold complex on an inner surface within the ion-exchange resin membrane.
• (2) Reducing step: the adsorbed dichlorophenanthroline gold complex was reduced in an aqueous solution containing sodium sulfite to form a gold electrode on a surface of the membrane polymeric electrolyte (ion-exchange resin membrane). At this time, the temperature of the aqueous solution was set at 40°C, and the dichlorophenanthroline gold complex was reduced for six hours while sodium sulfite was gradually added.
• (3) Washing step: the membrane polymeric electrolyte (ion-exchange resin membrane) with the gold electrode formed on its surface was taken out and washed with water at 60°C for 1 hour. The ion-exchange resin membrane (a) (electrode-electrolyte structure) with a pair of metal electrodes formed by the electroless plating method was cut into a size of 22 mm in length and 1.5 mm in width.

### (Preparation of electric storage element)

The ion-exchange resin membrane (a) was immersed in a 0.2 mol/l aqueous solution of tetraethyl ammonium chloride, washed with water and then dried. Thereafter, the ion-exchange resin membrane (a) was immersed in glycerol carbonate (SP value: 11.4) at 50°C for 3 hours so as to achieve a degree of swelling of about 35% and dried to obtain an electric storage element of Example 1.

### [Example 2]

### (Preparation of electric storage element)

An ion-exchange resin membrane (b), which was made by following the same procedure as in Example 1 except for repeating the cycle of the steps (1) to (3) two times, was immersed in a 0.2 mol/l ethyl-methylimidazolyl fluoroborate, and then dried. Thereafter, the ion-exchange resin membrane (b) was immersed in polyethylene glycol monooleate (SP value: 9.4) at 50°C for 0.5 hours so as to achieve a degree of swelling of about 25% and dried to obtain an electric storage element of Example 2.

### [Example 3]

### (Preparation of electric storage element)

An ion-exchange resin membrane (c), which was made by following the same procedure as in Example 1 except for repeating the cycle of the steps (1) to (3) two times, was immersed in a 0.2 mol/l ethyl-methylimidazolyl tetrafluoroborate, washed and dried. Thereafter, the ion-exchange resin membrane (c) was immersed in a mixture solution composed of polyethylene glycol monooleate (SP value: 9.4) and di-2-ethylhexyl adipate (SP value: 8.6) at a volume ratio of 1 : 2 at 50°C for 12 hours so as to achieve a degree of swelling of about 20% and dried to obtain an electric storage element of Example 2.

### [Example 4]

### (Preparation of electric storage element)

The ion-exchange resin membrane (a) was immersed in a 0.2 mol/l aqueous solution of tetramethyl ammonium chloride, washed and then dried. Thereafter, 1.0 mol/l of lithium salt of (tetrafluorosulfonyl)imide (LiTFSI) was dissolved in a mixture solution composed of glycerol carbonate (SP value: 11.4) and diethylene glycol monobutyl ether (SP value: 10.5) at a volume ratio of 3 : 1 to form a solution, and the ion-exchange resin membrane (a) was immersed in the obtained solution at 50°C for 3 hours so as to achieve a degree of swelling of about 35% to obtain an electric storage element of Example 4.

### [Comparative Example 1]

### (Preparation of electric storage element)

The ion-exchange resin membrane (a) was immersed in a 0.2 mol/l aqueous solution of tetraethyl ammonium chloride at 50°C for 2 hours so as to achieve a degree of swelling of about 25% to obtain an electric storage element of Comparative Example 1.

### [Comparative Example 2]

### (Preparation of electric storage element)

The ion-exchange resin membrane (a) was immersed in a 0.2 mol/l aqueous solution of tetraethyl ammonium chloride, and then dried. Thereafter, the ion-exchange resin membrane (a) was immersed in a propylene carbonate solution (SP value: 8.1) at 50°C for 2 hours so as to achieve a degree of swelling of about 25% to obtain an electric storage element of Comparative Example 2.

### [Comparative Example 3]

### (Preparation of electric storage element)

The ion-exchange resin membrane (a) was immersed in a 1.0 mol/l solution of lithium salt of (tetrafluorosulfonyl)imide (LiTFSI) and was immersed in propylene carbonate (SP value: 8.1) at 50°C for 5 hours so as to achieve a degree of swelling of about 10% to obtain an electric storage element of Comparative Example 3.

### <Measurement of withstand voltage>

A withstand voltage (V) of an electric storage element prepared by the following method was measured by a cyclic voltammogram (CV).

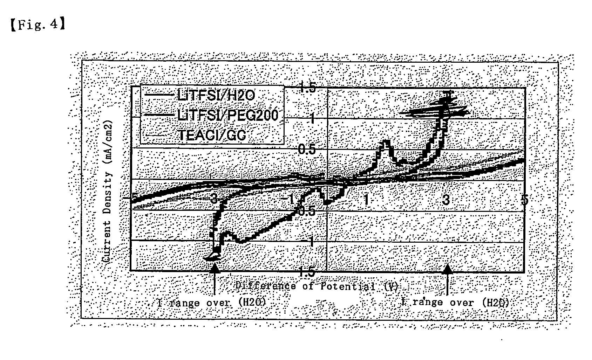

The size of each electric storage element was set at 15 mm in length and 15 mm in width, and a current value at the time when an applied voltage was varied at a sweep rate of 10 mV/sec was measured and plotted on a graph with a voltage on the horizontal axis and a current density on the vertical axis to obtain a cyclic voltammogram (CV). Using the obtained CV data, a withstand voltage was determined by determining a difference of a potential (by investigating a potential window) showing a rapid rise in the current value. The graph obtained by the measurement is shown in Fig. 4.

### <Measurement of specific capacitance>

The specific capacitance (electrostatic capacitance: F/cm³) of the prepared electric storage element was measured according to the following constant current discharge method of the two electrodes.
· Condition (I), applied voltage: 6 V, application time: 12 hr
· Condition (II), applied voltage: 10 V, application time: 10 min
· Condition (III), applied voltage: 6.3 V, application time: 12 hr
· Condition (IV), applied voltage: 5 V, application time: 12 hr

More specifically, a value measured according to the above-mentioned standard No. EIAJ RC-2377 using trade name "HJ-201B" (manufactured by HOKUTO DENKO Co., Ltd.) was taken as the specific capacitance. Further, in the case of measuring an electrostatic capacitance in this manner, the polymeric electrolyte as the object to be measured was cut off to form the electric storage element having a size of 10 mm x 10 mm in a swollen state. In addition, each of the obtained electric storage elements of Examples 1 to 4 in a state of containing an electrolyte solution had a thickness of 190 to 240 µm.

### <Measurement of energy density>

An energy density (Wh/Kg) of the prepared electric storage element was measured according to the following method.

Each electric storage element was formed in a size of 4.3 mm in length and 2.4 mm in width, and an electrostatic capacitance and an energy density of the element were determined from the gradient (Δt/Δv) of a voltage drop at the time of discharging and a discharge current (A).

According to the above-mentioned method, a withstand voltage, a specific capacitance and an energy density of the prepared electric storage element were measured. The obtained results are shown in Table 1.

**[Table 1]**

| | Example 1 | Example 2 | Example 3 | Example 4 | Comparative Example 1 | Comparative Example 2 | Comparative Example 3 |
|---|---|---|---|---|---|---|---|
| Condition | II | II | I | I | III | II | IV |
| Specific capacitance (F/cm³) | 25 | 36 | 48 | 85 | 10 | 7 | 20 |
| Energy density (Wh/Kg) | 43.5 | 62.6 | 83.5 | 147.9 | 17.4 | 12.2 | 34.8 |

It became apparent from the results of the above Table 1 and Fig. 4 that when the electric storage element prepared according to the present invention was used (Examples 1 to 4), in any example, the withstand voltage of 6.0 V or more was be applied and furthermore the electric storage element had the electrostatic capacitance of 20 (F/cm³) or more and the energy density of 35 (Wh/Kg) or more.

On the other hand, when water was used as an electrolyte medium in place of the amphiphilic polyether compound, the lipophilic compound or the mixture solution thereof, or the hydrophilic polyether compound and/or glycerin carbonate (Comparative Example 1), the voltage of 6.0 V or more was not applied, and the specific capacitance and the energy density were low. Further, when propylene carbonate was used as an electrolyte medium in place of the above solvent (Comparative Examples 2 and 3), the voltage of 6. 0 V or more was not applied. Therefore, it became clear that any comparative example was inferior in performance to the cases of using the electric storage element of the present invention.

It is understood from the above description that it is possible to obtain an electric storage element whose electrodes are metal electrodes, and which has a large specific capacitance and a high energy density and enables a higher withstand voltage (6.0 V or more) than in the prior art.

## Claims

1. An electric storage element comprising metal electrodes and an electrolyte containing a polymeric electrolyte,
wherein said metal electrodes are formed so as to constitute an electrode pair and
said metal electrodes are in contact with said electrolyte and are formed on a surface of said polymeric electrolyte and within said polymeric electrolyte, and
wherein an amphiphilic polyether compound and/or a lipophilic compound, which is liquid under the conditions of normal temperature and normal pressure, is contained in said electrolyte and
said electrolyte is in a swollen state due to said amphiphilic polyether compound and/or said lipophilic compound.

2. The electric storage element according to claim 2, wherein the solidifying point or the softening point of said amphiphilic polyether compound is 0°C or lower.

3. The electric storage element according to claim 1 or 2, wherein said amphiphilic polyether compound is polyethylene glycol monoalkylate, polypropylene glycol monoalkylate, polyethylene glycol monoalkyl ether, polypropylene glycol monoalkyl ether, and/or analogous compounds thereof.

4. The electric storage element according to any one of claims 1 to 3, wherein the solidifying point or the softening point of said lipophilic compound is 0°C or lower.

5. The electric storage element according to any one of claims 1 to 4, wherein said lipophilic compound has a molecular weight of 60 or more and is an alkyl ester or an alkyl ether of carboxylic acid, in which said electrolyte can be dissolved.

6. An electric storage element comprising metal electrodes and an electrolyte containing a polymeric electrolyte,
wherein said metal electrodes are formed so as to constitute an electrode pair and
said metal electrodes are in contact with said electrolyte and are formed on a surface of said polymeric electrolyte and within said polymeric electrolyte, and
wherein a hydrophilic polyether compound and/or glycerin carbonate, which is liquid under the conditions of normal temperature and normal pressure, is contained in said electrolyte and
said electrolyte is in a swollen state due to said hydrophilic polyether compound and/or glycerin carbonate.

7. The electric storage element according to any one of claims 1 to 6, wherein said polymeric electrolyte is an ion-exchange resin.

8. The electric storage element according to any one of claims 1 to 7, wherein said metal electrodes are formed by an electroless plating method.

9. The electric storage element according to any one of claims 1 to 8, wherein the shape of said metal electrode formed within said polymeric electrolyte is at least one of shapes of fractal, peninsula, island, icicle, polyp and coral each with a neck-shaped constriction, tree, mushroom, and indefinite shape.

10. The electric storage element according to any one of claims 1 to 9, wherein the negative electrode of said metal electrodes has, at its interface with said polymeric electrolyte, a lithium alloy with a metal component contained in said negative electrode and said lithium alloy is capable of releasing lithium ions through a reversible electrochemical oxidation-reduction reaction.

11. The electric storage element according to claim 10, wherein said lithium alloy is a lithium alloy produced by applying a negative voltage to the metal electrodes in a non-aqueous solution containing lithium ions.

12. The electric storage element according to any one of claims 1 to 11, wherein the negative electrode is a metal electrode contains one or more metals selected from the group consisting of gold, lead, tin and zinc.

13. The electric storage element according to any one of claims 1 to 11, wherein the metal electrode as the negative electrode is a gold electrode.

14. The electric storage element according to any one of claims 1 to 13, wherein the positive electrode is made of the same metal element as that of the metal component of the metal electrode as the negative electrode.

15. The electric storage element according to any one of claims 1 to 14, wherein said electric storage element is an electrode assembly.

16. The electric storage element according to any one of claims 1 to 15, wherein said electrolyte is a polymeric gel electrolyte containing an ion-exchange resin as well as said amphiphilic polyether compound and/or said lipophilic compound, or said hydrophilic polyether compound and/or glycerin carbonate.

17. The electric storage element according to any one of claims 1 to 16, wherein said electric storage element is in a swollen state due to said amphiphilic polyether compound and/or said lipophilic compound or said hydrophilic polyether compound and/or glycerin carbonate, and a degree of swelling of said electric storage element is 3 to 300%.

18. The electric storage element according to any one of claims 1 to 17, wherein a specific capacitance of said electric storage element is 20 F/cm³ or more.
